# EUROPEAN PATENT SPECIFICATION

(11) **EP 2 658 169 B1**
(45) Date of publication and mention of the grant of the patent: **09.09.2015**
(21) Application number: 12759921.5
(22) Date of filing: 28.04.2012
(51) Int. Cl.: H04M 11/06, H04L 12/10, H04J 3/07, H04J 3/10, H04L 27/26

(54) **DIGITAL SUBSCRIBER LINE SIGNAL PROCESSING METHOD, DEVICE AND DIGITAL SUBSCRIBER LINE SYSTEM**
VERFAHREN ZUR VERARBEITUNG EINES DIGITALEN TEILNEHMERLEITUNGSSIGNALS, VORRICHTUNG DAFÜR UND DIGITALES TEILNEHMERLEITUNGSSYSTEM
PROCÉDÉ DE TRAITEMENT DE SIGNAL DE LIGNE D'ABONNÉ NUMÉRIQUE, DISPOSITIF ET SYSTÈME DE LIGNE D'ABONNÉ NUMÉRIQUE

(43) Date of publication of application: 30.10.2013
(73) Proprietor: Huawei Technologies Co., Ltd., Longgang District Shenzhen, Guangdong 518129 (CN)
(72) Inventor: SHI, Cao, Shenzhen, Guangdong 518129 (CN); HE, Xiaoyue, Shenzhen, Guangdong 518129 (CN)
(74) Representative: Lord, Michael
(86) International application number: PCT/CN2012/074924
(87) International publication number: WO 2012/126411

(56) References cited:
- EP-A2- 1 011 206
- CN-A- 101 562 900
- CN-A- 101 753 253

## Description

### FIELD OF THE INVENTION

The present invention relates to a communications technology, and in particular, to a method, an apparatus, and a system for digital subscriber line (Digital Subscriber Line, DSL) signal processing.

### BACKGROUND OF THE INVENTION

A digital subscriber line technology is a high-speed transmission technology that transmits data through a telephone twisted pair, namely an unshielded twisted pair (Unshielded Twisted Pair, UTP). Currently, DSL technologies include asymmetric digital subscriber line (Asymmetrical Digital Subscriber Line, ADSL), very-high-bit-rate digital subscriber line (Very-high-bit-rate Digital Subscriber Line, VDSL), digital subscriber line (ISDN Digital Subscriber Line, IDSL) based on an integrated services digital network (Integrated Services Digital Network, ISDN), single-pair high-bit-rate digital subscriber line (Single-pair High-bit-rate Digital Subscriber Line, SHDSL), and the like.

Among various digital subscriber line technologies (xDSL), except baseband transmission DSLs such as IDSL and SHDSL, a passband transmission DSL uses a frequency division multiplexing technology to enable a DSL service to coexist with a plain old telephone service (Plain Old Telephone Service, POTS) on a same twisted pair. In the same twisted pair, the DSL service occupies a high frequency band, the POTS occupies a baseband part lower than 4 kHz, and a POTS signal and a DSL service signal are separated or merged through a splitter/integrator (Splitter).

With the deepening of construction of fiber-to-the-x (Fiber-to-the-x, FTTx), twisted pairs are getting shorter in application scenarios. In a fiber-to-the-distribution point (Fibre-To-The-Distribution point, FTTdp) scenario, a typical application distance of a twisted pair is less than 100 m, the number of subscribers is less than 32, a bandwidth of a frequency band that can be used reaches 100 MHz, and a single pair of lines can provide a rate exceeding 500 Mbps.

The reachable line rate of a short-distance DSL technology is very high and can even reach 1 Gbps, and the average rate of a subscriber is far below the value. Therefore, in a traditional DSL technology, when a subscriber rate is low, idle information will be filled in a sent frame, and signals are kept being sent on a line. In this case, most of symbols in the frame bear idle information and do not bear subscriber data. However, the symbols that bear idle information also consume power of a digital front end (Digital front end, DFE), an analog front end (Analog front end, AFE), and a line driver (line Driver, LD); and a receiving side also consumes power, because it needs to process these symbols.

EP1011206 A2 discloses a method that sub-channel carrier transmissions are restricted during periods of CPE inactivity to reduce power consumption and associated heating in a line card of termination equipment.

US2007/237523 A1 discloses a method and corresponding apparatus for diagnosing problems on a time division multiple access optical distribution network.

### SUMMARY OF THE INVENTION

Embodiments of the present invention provide a method, an apparatus, and a system for digital subscriber line signal processing to save energy for the digital subscriber line system.

According to one aspect, an embodiment of the present invention provides a method for digital subscriber line signal processing, including:
using symbols in a frame to be sent to bear data to be sent; wherein the data to be sent is completely borne on a portion of the symbols in the frame, while remaining symbols in the frame bear idle information;
acquiring the number of the remaining symbols that do not bear the data to be sent;
adding information of the number of the remaining symbols to the frame, and sending the frame that bears the data to be sent and the information of the number of the remaining symbols.

According to another aspect, an embodiment of the present invention provides an apparatus for digital subscriber line signal processing, including:
a bearing module, configured to use symbols in a frame to be sent to bear data to be sent; wherein the data to be sent is completely beard on a portion of the symbols in the frame, while remaining symbols in the frame bear idle information;
a remaining symbol acquiring module, configured to acquire the number of the remaining symbols that do not bear the data to be sent in the frame;
an adding and sending module, configured to add information of the number of the remaining symbols into the frame, and send the frame that bears the data to be sent and the information of the number of the remaining symbols.

According to still another aspect, an embodiment of the present invention provides a system for digital subscriber line signal processing, including the signal processing apparatus described above.

A technical effect of the method, apparatus, and system for digital subscriber line signal processing provided in the embodiments of the present invention is as follows: The frame to be sent is added with the information about the number of the remaining symbols that do not bear the data to be sent, so that the receiving side can acquire the information about the remaining symbols that do not bear the data to be sent and therefore do not process the remaining symbols. In this way, signal processing power in a DSL system is saved, and power consumption is reduced, thereby saving energy for the DSL system.

### BRIEF DESCRIPTION OF THE DRAWINGS

FIG. 1A is a flowchart of a method for digital subscriber line signal processing according to an embodiment of the present invention;
FIG. 1B is a schematic diagram of symbol bearing in a frame to be sent in a method for digital subscriber line signal processing according to an embodiment of the present invention;
FIG. 1C is a schematic structural diagram of a frame to be sent in a method for digital subscriber line signal processing according to an embodiment of the present invention;
FIG. 2 is a schematic diagram of downlink timeslot synchronization of different ports in a method for digital subscriber line signal processing according to Embodiment 4 of the present invention;
FIG. 3 is a schematic diagram of downlink timeslot synchronization, implemented based on time synchronization, of different ports in the signal processing method of a digital subscriber line according to Embodiment 4 of the present invention;
FIG. 4 is a schematic diagram of a crosstalk jitter to be solved in the signal processing method of a digital subscriber line according to Embodiment 4 of the present invention;
FIG. 5 is a schematic diagram of solving a crosstalk jitter in the signal processing method of a digital subscriber line according to Embodiment 4 of the present invention;
FIG. 6A is a schematic structural diagram of an apparatus for digital subscriber line signal processing according to an embodiment of the present invention;
FIG. 6B is a schematic structural diagram of a synchronization signal generating module in an apparatus for digital subscriber line signal processing according to an embodiment of the present invention; and
FIG. 7 is a schematic structural diagram of a system for digital subscriber line signal processing according to an embodiment of the present invention.

### DETAILED DESCRIPTION OF THE EMBODIMENTS

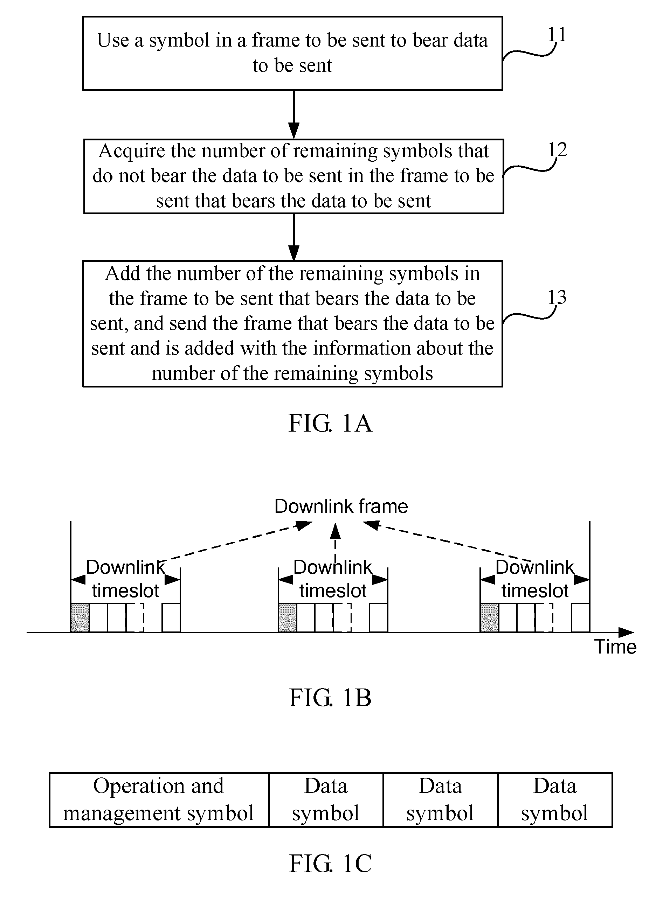

FIG. 1A is a flowchart of a method for digital subscriber line signal processing according to an embodiment of the present invention. As shown in FIG. 1A, the signal processing method of a digital subscriber line includes:
Step 11: Use a symbol in a frame to be sent to bear data to be sent.
Step 12: Acquire the number of remaining symbols that do not bear the data to be sent in the frame to be sent that bears the data to be sent. For example, the number of symbols (namely, remaining symbols) in which all the filled bit information is idle information among symbols in the frame to be sent may be estimated according to the size of the data to be sent and the data capacity of the frame to be sent. As shown in FIG. 1B, gray boxes indicate symbols that bear service information, namely, the data to be sent, and white boxes indicate symbols that bear idle information.
Step 13: Add information about the number of the remaining symbols in the frame to be sent that bears the data to be sent, and send the frame that bears the data to be sent and is added with the information about the number of the remaining symbols. The frame to be sent is shown in FIG. 1C, including an operation and management symbol (Operation And Management Symbol, OAM Symbol) and data symbols. The operation and management symbol is used to bear data with a small data amount and a high real-time requirement, for example, information indicating that a receiving side has excessive bit errors. The information about the number of the remaining symbols may be borne in the operation and management symbol and may also be borne in a management message. The management message that bears the information about the number of the remaining symbols is mixed with data information and then borne in a data symbol. The management message may be used for a transceiver to transmit management and control information with a large data amount, for example, a signal-to-noise ratio (Signal-to-Noise Rate, SNR) on the customer premises equipment (Customer Premises Equipment, CPE) side, and the like.

In an embodiment, a management message and subscriber data may be mixed according to the following example: Content borne in a data symbol includes a subscriber data frame and a management message frame; for example, a management message frame is inserted among K subscriber data frames, and then the subscriber data frames and the management message frame are mixed and borne in the data symbol.

Steps 11-13 may be performed by a transceiver in a time division duplex (Time Division Duplex, TDD) DSL system.

Optionally, when the remaining symbols are sent, signal sending power of the remaining symbols is set to 0.

Optionally, after adding the information about the number of the remaining symbols in the frame to be sent that bears the data to be sent, further including:
generating a downlink timeslot synchronization signal; for example, the transceiver may use a homologous clock, a symbol period parameter, and information about a ratio of uplink time to downlink time to generate the downlink timeslot synchronization signal.

Accordingly, in step 13, the sending the frame that bears the data to be sent and is added with the information about the number of the remaining symbols includes: sending, triggered by the downlink timeslot synchronization signal, a sent frame that bears the data to be sent and is added with the information about the number of the remaining symbols.

Optionally, when the sent frame is sent, signal sending power of all symbols in a pre-assigned symbol set in the sent frame is set to a non-0 value, and the sent frame is a frame to be sent that bears the data to be sent and is added with the number of the remaining symbols.

Optionally, the remaining symbols are replaced with idle symbols known by the receiving side.

Optionally, the idle symbols may be the same as the last symbol that bears the sent data or be a specific symbol whose modulation mode and bit bearer content are pre-arranged by the sending side and receiving side.

Alternatively and optionally, a part of the remaining symbols are replaced with idle symbols known by the receiving side, and signal sending power of the other part of the remaining symbols is set to 0.

In the signal processing method according to the embodiment of the present invention, the frame to be sent is added with the information about the number of the remaining symbols that do not bear the data to be sent, so that the receiving side can acquire the information about the number of the remaining symbols that do not bear the data to be sent and therefore do not process the remaining symbols. In this way, signal processing power in a TDD DSL system is saved, and power consumption is reduced, thereby saving energy for the TDD DSL system.

The following further describes in detail the signal processing method through Embodiments 1 to 4.

### Embodiment 1

A method for digital subscriber line signal processing provided in this embodiment includes:

A transceiver bears data to be sent in a symbol in a frame to be sent;
the transceiver estimates, according to the size of the data to be sent and the data capacity of the frame to be sent, the number of symbols in which all the filled bit information is idle information, namely, the number of remaining symbols, among symbols in the frame to be sent, for example, K symbols, namely, K remaining symbols;
the transceiver sets signal sending power of all the K symbols that bear idle information to 0, and because information borne by the symbols that bear idle information is empty, setting their signal sending power to 0 does not affect the communication quality of data and reduces power consumption of signal sending; and
if K is not 0, the transceiver adds information about the number K in an operation and management symbol or a management message part in the frame to be sent to instruct a receiving side that the number of symbols whose signal sending power is 0 in the frame is K, so that the receiving side does not process the K symbols after receiving the instruction, thereby further reducing power consumption of signal processing.

### Embodiment 2

A method for digital subscriber line signal processing provided in this embodiment includes:
A transceiver bears data to be sent in a symbol in a frame to be sent;
the transceiver estimates, according to the size of the data to be sent and the data capacity of the frame to be sent, the number of symbols in which all the filled bit information is idle information among symbols in the frame to be sent, for example, K symbols;
the transceiver replaces the K symbols in which all the filled bit information is idle information with an idle symbol, the idle symbol is a specific symbol pre-arranged by the sending and receiving sides, and power consumption of DFE processing for the transceiver to generate K symbols that bear idle information may be reduced; on the receiving side where the frame sent by the transceiver is received, the idle symbol may be discarded directly, without being processed, and therefore power consumption is further reduced; and
if K is not 0, the transceiver adds information about the number K in an operation and management symbol or a management message part in the frame to be sent to instruct a receiving side that the number of idle symbols in the frame is K, so that the receiving side does not process the K idle symbols after receiving the instruction, thereby further reducing power consumption of signal processing.

The idle symbol may be the same as the last non-idle symbol in the frame and may also be a specific symbol whose modulation mode and bit (bit) bearer content have been pre-arranged by the sending and receiving sides. For example, all subcarriers bear bit 2. The borne bit is generated by a pseudo random code generator, and the initial state of the pseudo random code generator is a predetermined value.

### Embodiment 3

This embodiment combines Embodiments 1 and 2. Different from Embodiments 1 and 2, a transceiver sets signal sending power of a part of the K symbols in which all the filled bit information is idle information to 0 and replaces the other part of the K symbols with the idle symbol in Embodiment 2. Similarly, the transceiver adds information about the number K in an operation and management symbol or a management message part in the frame to be sent to instruct a receiving side that the number of the symbols in which all the filled bit information is idle information in the frame is K, so that the receiving side does not process the K symbols after receiving the instruction, thereby further reducing power consumption of signal processing.

### Embodiment 4

In this embodiment, based on Embodiments 1 and 2, a synchronization processing operation is added to remove near-end crosstalk that may occur in an existing DSL system.

In a traditional TDD DSL system, uplink and downlink frequency spectra generally overlap. If uplink and downlink timeslots are asynchronous, when a port is receiving an uplink signal, another port may be sending a downlink signal. In this case, the sent downlink signal generates near-end crosstalk for other ports and interferes with uplink receiving; especially in a part where uplink and downlink frequency spectra overlap, great interference is generated, and demodulation of signals will be seriously affected. Therefore, the synchronization processing operation is further added in this embodiment, so that downlink symbols and timeslots of various DSL ports are synchronous, thereby removing the near-end crosstalk of the TDD DSL system.

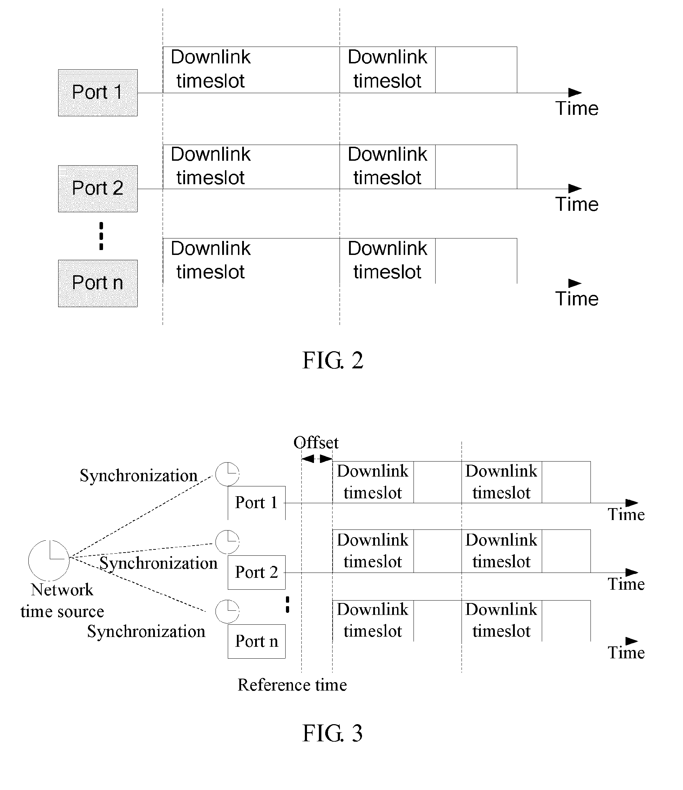

Specifically, when sending a frame, a transceiver must implement uplink and downlink timeslot synchronization between various ports. As shown in FIG. 2, downlink timeslot synchronization is implemented among port 1, port 2, ..., and port n, and the near-end crosstalk of downlink frames between port 1, port 2, ..., and port n can be avoided. This removes the near-end crosstalk of the DSL system. It is similar for the uplink.

The following describes a method of downlink timeslot synchronization between DSL ports in the DSL system of the embodiment of the present invention. Specifically, a downlink timeslot synchronization signal may be generated by using a homologous clock, a symbol period parameter, and information about a ratio of uplink time to downlink time. Various DSL ports perform uplink and downlink timeslot switchover by referring to the downlink timeslot synchronization signal.

Alternatively, as shown in FIG. 3, various DSL ports may also be synchronized with a network time source, that is, a reference time is used as a reference. A start time and an end time of a downlink timeslot are obtained by calculating an offset between the downlink timeslot and the reference time, thereby implementing downlink timeslot synchronization.

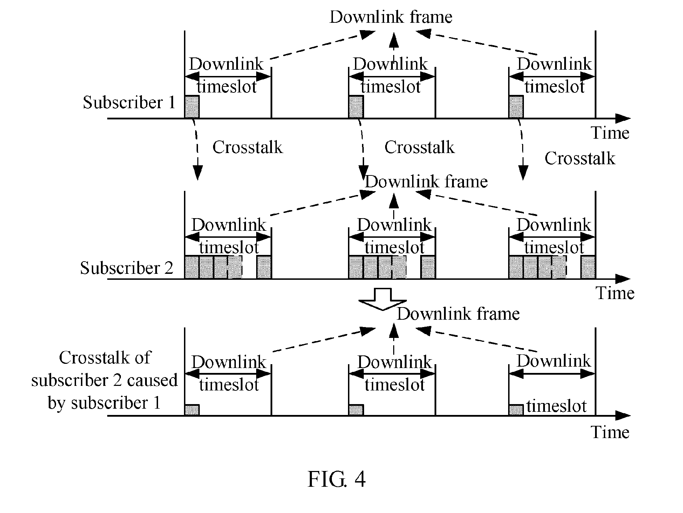

In Embodiment 1, because the signal sending power of all the K symbols that bear idle information in the sent frame is 0, some symbols in the sent frame bear power and some symbols bear no power, which is likely to generate a jitter for far-end crosstalk of other subscribers. As shown in FIG. 4, because of a far-end crosstalk jitter caused by subscriber 1 to subscriber 2, the crosstalk noise measured for the affected subscriber 2 is low. Consequently, a noise protection capability on a symbol with far-end crosstalk is insufficient.

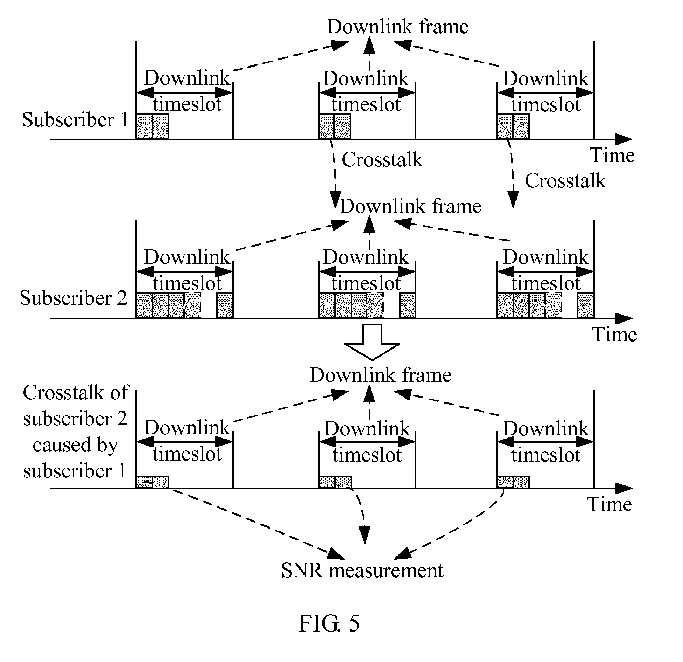

Therefore, optionally, after synchronization is implemented for frames of various DSL ports of the DSL system, signal sending power on a pre-assigned symbol set L of all frames of various DSL ports is not 0, that is, the signal sending power of the pre-assigned symbol set L is set to a non-0 value. Even if some symbols in the pre-assigned symbol set L bear idle information, the sending power is also not 0. As shown in FIG. 5, various receivers perform signal-to-noise ratio (SNR) measurement on the pre-assigned symbol set L to ensure that a crosstalk noise will not be incorrectly estimated, thereby removing a far-end crosstalk jitter.

Persons of ordinary skill in the art may understand that all or a part of the steps in each of the foregoing method embodiments may be implemented by a program instructing relevant hardware. The program may be stored in a computer readable storage medium. When the program is run, the steps of the methods in the embodiments are performed. The storage medium includes any medium that is capable of storing program codes, such as a ROM, a RAM, a magnetic disk, or an optical disk.

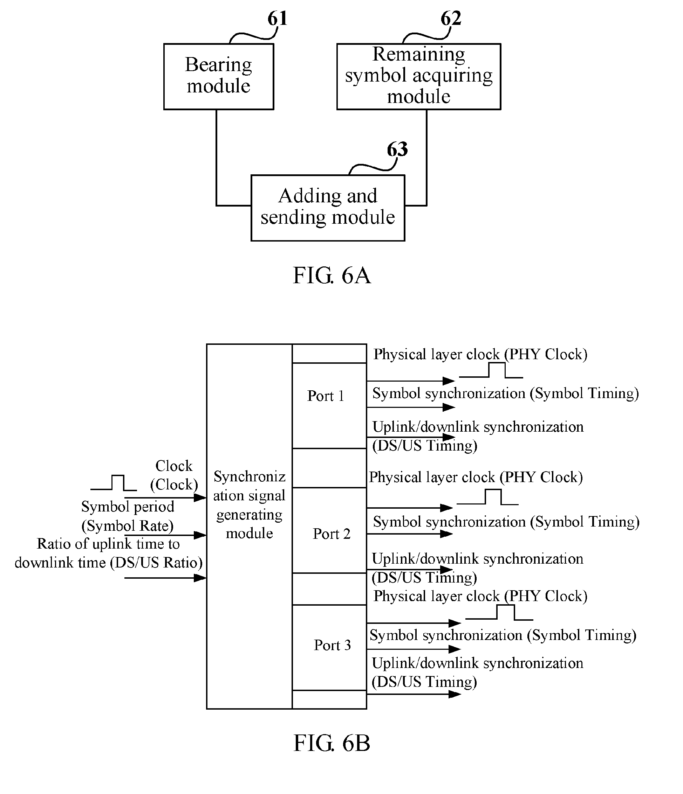

FIG. 6A is a schematic structural diagram of an apparatus for digital subscriber line signal processing according to an embodiment of the present invention. The signal processing apparatus provided in the embodiment of the present invention may be an xDSL transceiver at a customer premises in a DSL system and may also be an xDSL transceiver at a central office in a DSL system, as shown in FIG. 6A, including a bearing module 61, a remaining symbol acquiring module 62, and an adding and sending module 63.

The bearing module 61 is configured to use a symbol in a frame to be sent to bear data to be sent.

The remaining symbol acquiring module 62 is configured to acquire the number of remaining symbols that do not bear the data to be sent in the frame to be sent that bears the data to be sent. For details, see the descriptions of FIG. 1A to FIG. 1B.

The adding and sending module 63 is configured to add information about the number of the remaining symbols in the frame to be sent that bears the data to be sent, and send the frame that bears the data to be sent and is added with the information about the number of the remaining symbols. For details, see the descriptions of FIG. 1A to FIG. 1C.

Optionally, the signal processing apparatus provided in the embodiment of the present invention further includes:
a first power setting module, configured to set, when the adding and sending module sends the remaining symbols, signal sending power of the remaining symbols to 0.

Optionally, the signal processing apparatus provided in the embodiment of the present invention further includes:
a synchronization signal generating module, configured to generate a downlink timeslot synchronization signal; and
the adding and sending module may further be configured to send, triggered by the downlink timeslot synchronization signal, a sent frame that bears the data to be sent and is added with the information about the number of the remaining symbols.

As shown in FIG. 6B, the synchronization signal generating module may at least use a homologous clock, a symbol period parameter, and information about a ratio of uplink time to downlink time to generate a downlink timeslot synchronization signal. Various ports, such as a port 1, a port 2, and a port 3, perform uplink and downlink timeslot switchover by referring to the downlink timeslot synchronization signal. The homologous clock is applied at various ports and used to generate a sampling clock.

Optionally, the first power setting module is further configured to set, when the adding and sending module is triggered by the downlink timeslot synchronization signal to send the sent frame, signal sending power of all symbols in a pre-assigned symbol set in the sent frame to a non-0 value, and the sent frame is a frame to be sent that bears the data to be sent and is added with the information about the number of the remaining symbols.

Optionally, the signal processing apparatus provided in the embodiment of the present invention further includes:
a symbol replacing module, configured to replace the remaining symbols with idle symbols known by a receiving side.

Optionally, the idle symbols are the same as the last symbol that bears the sent data or are a specific symbol whose modulation mode and bit bearer content are pre-arranged by the sending and receiving sides.

Optionally, the symbol replacing module may be specifically configured to replace a part of the remaining symbols with idle symbols known by the receiving side.

Accordingly, the signal processing apparatus further includes:
a second power setting module, configured to set signal sending power of the other part of the remaining symbols to 0.

In the embodiment of the present invention, the signal processing apparatus of a digital subscriber line uses the adding and sending module to add the information about the number of the remaining symbols that do not bear the data to be sent in the frame to be sent, so that the receiving side can acquire the information about the number of the remaining symbols that do not bear the data to be sent and therefore do not process the remaining symbols. In this way, signal processing power in a TDD DSL system is saved, and power consumption is reduced, thereby saving energy for the TDD DSL system.

A system for digital subscriber line signal processing provided in an embodiment of the present invention includes any signal processing apparatus of a digital subscriber line provided in the foregoing apparatus embodiment.

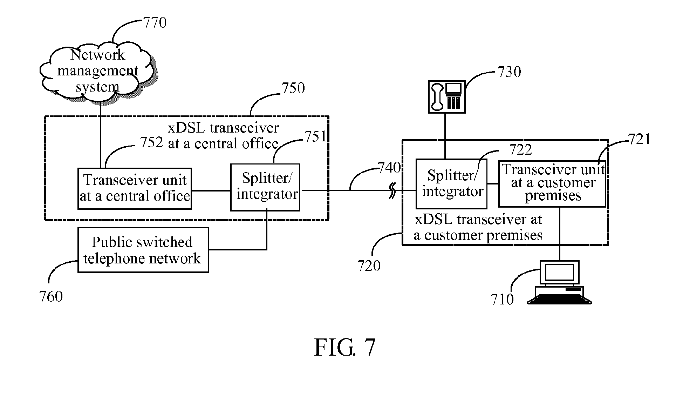

In FIG. 7, for example, a digital subscriber line system provided in an embodiment of the present invention includes an xDSL transceiver 720 at a customer premises and an xDSL transceiver 750 at a central office. The xDSL transceiver 750 at a central office may be set on a DSL access multiplexer (DSL Access Multiplexer, DSLAM). Generally, a DSLAM may include multiple xDSL transceiver 750s at a central office, which are used to provide multiple DSL accesses. A passband transmission xDSL uses a discrete multi-tone modulation (Discrete Multi-Tone Modulation, DMT) technology to perform modulation and demodulation.

As shown in FIG. 7, the xDSL transceiver 720 at a customer premises includes a transceiver unit 721 at a customer premises and a splitter/integrator 722. The xDSL transceiver 750 at a central office includes a transceiver unit 752 at a central office and a splitter/integrator 751.

The transceiver unit 721 at a customer premises and the transceiver unit 752 at a central office may be any signal processing apparatus of a digital subscriber line provided in the foregoing apparatus embodiment.

In an uplink direction, the transceiver unit 721 at a customer premises receives a DSL service signal from a computer 710 and amplifies the received DSL service signal. Then, the transceiver unit 721 at a customer premises sends the processed DSL service signal to the splitter/integrator 722.

The splitter/integrator 722 integrates the DSL service signal from the transceiver unit 721 at a customer premises with a POTS signal of a telephone terminal 730, for example, multiplexes the DSL service signal and the POTS signal and transmits the integrated signal through a UTP 740.

The splitter/integrator 751 of the xDSL transceiver 750 at a central office receives the signal integrated by the xDSL transceiver 720 at a customer premises. The splitter/integrator 751 splits the received signal, sends the POTS signal to a public switched telephone network (Public Switched Telephone Network, PSTN) 760, and sends the DSL service signal to the transceiver unit 752 at a central office of the xDSL transceiver 750 at a central office. The transceiver unit 752 at a central office amplifies the received DSL service signal and then sends it to a network management system (Network Management System, NMS) 770.

In the downlink direction of a signal, the signal is processed and transmitted according to an order opposite to the order described above.

The digital subscriber line system provided in the embodiment of the present invention uses any signal processing apparatus provided in the foregoing apparatus embodiment to add, in a signal processing method, information about the number of remaining symbols that do not bear data to be sent in a frame to be sent, so that a receiving side can acquire the information about the number of the remaining symbols that do not bear the data to be sent and therefore do not process the remaining symbols. In this way, signal processing power in a TDD DSL system is saved, and power consumption is reduced, thereby saving energy for the TDD DSL system.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as such modifications or replacements do not cause the essence of corresponding technical solutions to depart from the scope of the technical solutions of the embodiments of the present invention.

## Claims

1. A method for digital subscriber line signal processing, comprising:
using (11) symbols in a frame to be sent to bear data to be sent, wherein the data to be sent is completely borne on a portion of the symbols in the frame, while remaining symbols in the frame bear idle information, **characterized in that** the method further comprises:
acquiring (12) the number of the remaining symbols that do not bear the data to be sent;
adding (13) information of the number of the remaining symbols to the frame, and sending the frame that bears the data to be sent and the information of the number of the remaining symbols.

2. The method according to claim 1, wherein the signal sending power of the remaining symbols is set to 0 for the remaining symbols.

3. The method according to claim 2, wherein,
the sending the frame that bears the data to be sent and the information of the number of the remaining symbols comprising: generating a downlink timeslot synchronization signal, and sending, triggered by the downlink timeslot synchronization signal, a sent frame that bears the data to be sent and the information of the number of the remaining symbols.

4. The method according to claim 2, further comprising:
setting, when sending the frame, signal sending power of all symbols in a pre-assigned symbol set in the frame to a non-0 value, wherein the frame is a frame that bears the data to be sent and the information of the number of the remaining symbols.

5. The method according to claim 1, further comprising: replacing the remaining symbols with idle symbols known by a receiving side.

6. The method according to claim 5, wherein the idle symbols are the same as the last symbol that bears the data, or a specific symbol whose modulation mode and bit bearer content are pre-arranged by the sending and receiving sides.

7. The method according to claim 1, further comprising: replacing a part of the remaining symbols with idle symbols known by a receiving side, and setting signal sending power of the other part of the remaining symbols to 0.

8. An apparatus for digital subscriber line signal processing, comprising:
a bearing module (61), configured to use symbols in a frame to be sent to bear data to be sent; wherein the data to be sent is completely borne on a portion of the symbols in the frame, while remaining symbols in the frame bear idle information;
**characterized in that** the apparatus further comprises:
a remaining symbol acquiring module (62), configured to acquire the number of the remaining symbols that do not bear the data to be sent; and
an adding and sending module (63), configured to add information of the number of the remaining symbols to the frame, and send the frame that bears the data to be sent and the information of the number of the remaining symbols.

9. The apparatus according to claim 8, further comprising:
a first power setting module, configured to set, when the adding and sending module (63) sends the remaining symbols, signal sending power of the remaining symbols to 0 for the remaining symbols.

10. The apparatus according to claim 9, further comprising:
a synchronization signal generating module, configured to generate a downlink timeslot synchronization signal, wherein:
the adding and sending module (63) is configured to send, triggered by the downlink timeslot synchronization signal, a sent frame that bears the data to be sent and the information of the number of the remaining symbols.

11. The apparatus according to claim 9, wherein the first power setting module is further configured to set, when the adding and sending module (63) sends the frame, signal sending power of all symbols in a pre-assigned symbol set in the frame to a non-0 value, and the frame is a frame that bears the data to be sent and the information of the number of the remaining symbols.

12. The apparatus according to claim 8, further comprising:
a symbol replacing module, configured to replace the remaining symbols with idle symbols known by a receiving side.

13. The apparatus according to claim 12, wherein the idle symbols are the same as the last symbol that bears the data, or a specific symbol whose modulation mode and bit bearer content are pre-arranged by the sending and receiving sides.

14. The apparatus according to claim 8, wherein the symbol replacing module is specifically configured to replace a part of the remaining symbols with idle symbols known by a receiving side;
the apparatus further comprising:
a second power setting module, configured to set signal sending power of the other part of the remaining symbols to 0.

15. A system for digital subscriber line signal processing, comprising an xDSL transceiver (750) at a central office and an xDSL transceiver (720) at a customer premises, wherein the xDSL transceiver (750) at the central office is connected to the xDSL transceiver (720) at the customer premises through a twisted pair, and the xDSL transceiver at the central office and/or the xDSL transceiver at the customer premises comprises the signal processing apparatus of a digital subscriber line according to any one of claims 8-14.

## Patentansprüche

1. Verfahren zum Verarbeiten eines Signals einer digitalen Teilnehmeranschlussleitung, das die folgenden Schritte aufweist:
Verwenden (11) von Symbolen in einem zu sendenden Rahmen, um zu sendende Daten zu tragen, wobei die zu sendenden Daten vollständig auf einem Anteil der Symbole im Rahmen getragen werden, während die restlichen Symbole im Rahmen Leerlaufinformationen tragen, **dadurch gekennzeichnet, dass** das Verfahren ferner aufweist:
Erfassen (12) der Anzahl der restlichen Symbole, die die zu sendenden Daten nicht tragen;
Hinzufügen (13) von Informationen der Anzahl der restlichen Symbole zum Rahmen, und Senden des Rahmens, der die zu sendenden Daten und die Informationen der Anzahl der restlichen Symbole trägt.

2. Verfahren nach Anspruch 1, wobei die Signalsendeleistung der restlichen Symbole für die restlichen Symbole auf 0 gesetzt wird.

3. Verfahren nach Anspruch 2, wobei
das Senden des Rahmens, der die zu sendenden Daten und die Informationen der Anzahl der restlichen Symbole trägt, aufweist:
Erzeugen eines Abwärtsstrecken-Zeitschlitz-Synchronisationssignals, und durch das Abwärtsstrecken-Zeitschlitz-Synchronisationssignal ausgelöstes Senden eines Senderahmens, der die zu sendenden Daten und die Informationen der Anzahl der restlichen Symbole trägt.

4. Verfahren nach Anspruch 2, das ferner aufweist:
Setzen beim Senden des Rahmens der Signalsendeleistung aller Symbole in einem vorher zugewiesenen Symbol, das im Rahmen eingesetzt ist, auf einen von 0 verschiedenen Wert, wobei der Rahmen ein Rahmen ist, der die zu sendenden Daten und die Informationen der Anzahl der restlichen Symbole trägt.

5. Verfahren nach Anspruch 1, das ferner aufweist:
Ersetzen der restlichen Symbole durch Leerlaufsymbole, die einer Empfangsseite bekannt sind.

6. Verfahren nach Anspruch 5, wobei die Leerlaufsymbole dieselben wie das letzte Symbol, das die Daten trägt, oder ein spezifisches Symbol sind, dessen Modulationsart und Bitträgerinhalt durch die Sende- und Empfangsseite im Voraus angeordnet werden.

7. Verfahren nach Anspruch 1, das ferner aufweist:
Ersetzen eines Teils der restlichen Symbole durch Leerlaufsymbole, die der Empfangsseite bekannt sind, und Setzen der Signalsendeleistung des anderen Teils der restlichen Symbole auf 0.

8. Vorrichtung zur Verarbeitung eines Signals einer digitalen Teilnehmeranschlussleitung, das Folgendes aufweist:
ein Trägermodul (61), das konfiguriert ist, Symbole in einem zu sendenden Rahmen zu verwenden, um zu sendende Daten zu tragen; wobei die zu sendenden Daten vollständig auf einem Anteil der Symbole im Rahmen getragen werden, während die restlichen Symbole im Rahmen Leerlaufinformationen tragen;
**dadurch gekennzeichnet, dass** die Vorrichtung ferner aufweist:
ein Restsymbol-Erfassungsmodul (62), das konfiguriert ist, die Anzahl der restlichen Symbole zu erfassen, die die zu sendenden Daten nicht tragen; und
ein Hinzufügungs- und Sendemodul (63), das konfiguriert ist, Informationen der Anzahl der restlichen Symbole zum Rahmen hinzuzufügen, und den Rahmen zu senden, der die zu sendenden Daten und die Informationen der Anzahl der restlichen Symbole trägt.

9. Vorrichtung nach Anspruch 8, die ferner aufweist:
ein erstes Leistungseinstellmodul, das konfiguriert ist, wenn das Hinzufügung- und Sendemodul (63) die restlichen Symbole sendet, die Signalsendeleistung der restlichen Symbole für die restlichen Symbole auf 0 zu setzen.

10. Vorrichtung nach Anspruch 9, die ferner aufweist:
ein Synchronisationssignal-Erzeugungsmodul, das konfiguriert ist, ein Abwärtsstrecken-Zeitschlitz-Synchronisationssignal zu erzeugen, wobei:
das Hinzufügungs- und Sendemodul (63) konfiguriert ist, durch das Abwärtsstrecken-Zeitschlitz-Synchronisationssignal ausgelöst einen Senderahmen zu senden, der die zu sendenden Daten und die Informationen der Anzahl der restlichen Symbole trägt.

11. Vorrichtung nach Anspruch 9, wobei das erste Leistungseinstellmodul ferner konfiguriert ist, wenn das Hinzufügungs- und Sendemodul (63) den Rahmen sendet, die Signalsendeleistung aller Symbole in einem vorher zugewiesenen Symbol, das im Rahmen eingesetzt ist, auf einen von 0 verschiedenen Wert zu setzen, und der Rahmen ein Rahmen ist, der die zu sendenden Daten und die Informationen der Anzahl der restlichen Symbole trägt.

12. Vorrichtung nach Anspruch 8, die ferner aufweist:
ein Symbolersetzungsmodul, das konfiguriert ist, die restlichen Symbole durch Leerlaufsymbole zu ersetzen, die der Empfangsseite bekannt sind.

13. Vorrichtung nach Anspruch 12, wobei die Leerlaufsymbole dieselben wie das letzte Symbol, das die Daten trägt, oder ein spezifisches Symbol sind, dessen Modulationsart und Bitträgerinhalt durch die Sende- und Empfangsseite im Voraus angeordnet werden.

14. Vorrichtung nach Anspruch 8, wobei das Symbolersetzungsmodul insbesondere konfiguriert ist, einen Teil der restlichen Symbole durch Leerlaufsymbole zu ersetzen, die der Empfangsseite bekannt sind;
wobei die Vorrichtung ferner aufweist:
ein zweites Leistungseinstellmodul, das konfiguriert ist, die Signalsendeleistung des anderen Teils der restlichen Symbole auf 0 zu setzen.

15. System zur Verarbeitung eines Signals einer digitalen Teilnehmeranschlussleitung, das einen xDSL-Transceiver (750) an einer Vermittlungsstelle und einen xDSL-Transceiver (720) in Kundenräumlichkeiten aufweist, wobei der xDSL-Transceiver (750) an der Vermittlungsstelle mit dem xDSL-Transceiver (720) in den Kundenräumlichkeiten durch ein Twisted-Pair-Kabel verbunden ist, und der xDSL-Transceiver an der Vermittlungsstelle und/oder der xDSL-Transceiver in den Kundenräumlichkeiten die Signalverarbeitungsvorrichtung einer digitalen Teilnehmeranschlussleitung nach einem der Ansprüche 8 bis 14 aufweisen.

## Revendications

1. Procédé de traitement de signal de ligne d'abonné numérique, comprenant :
l'utilisation (11) de symboles dans une trame à envoyer pour porter des données à envoyer, les données à envoyer étant portées complètement sur une partie des symboles dans la trame, tandis que des symboles restants dans la trame portent des informations inactives, **caractérisé en ce que** le procédé comprend en outre :
l'acquisition (12) du nombre des symboles restants qui ne portent pas les données à envoyer ;
l'addition (13) à la trame d'informations du nombre des symboles restants, et l'envoi de la trame qui porte les données à envoyer et les informations du nombre des symboles restants.

2. Procédé selon la revendication 1, dans lequel la puissance d'envoi de signal des symboles restants est réglée à 0 pour les symboles restants.

3. Procédé selon la revendication 2, dans lequel
l'envoi de la trame qui porte les données à envoyer et les informations du nombre des symboles restants comprend : la génération d'un signal de synchronisation de créneau temporel de trajet descendant et l'envoi, déclenché par le signal de synchronisation de créneau temporel de trajet descendant, d'une trame envoyée qui porte les données à envoyer et les informations du nombre des symboles restants.

4. Procédé selon la revendication 2, comprenant en outre :
le réglage, lors de l'envoi de la trame, de la puissance d'envoi de signal de tous les symboles dans un ensemble de symboles pré-attribués dans la trame à une valeur non 0, la trame étant une trame qui porte les données à envoyer et les informations du nombre des symboles restants.

5. Procédé selon la revendication 1, comprenant en outre : le remplacement des symboles restants par des symboles inactifs connus par un côté de réception.

6. Procédé selon la revendication 5, dans lequel les symboles inactifs sont les mêmes que le dernier symbole qui porte les données, ou qu'un symbole spécifique dont le mode de modulation et le contenu porteur de bits sont organisés au préalable par les côtés d'envoi et de réception.

7. Procédé selon la revendication 1, comprenant en outre : le remplacement d'une partie des symboles restants par des symboles inactifs connus par un côté de réception, et le réglage de la puissance d'envoi de signal de l'autre partie des symboles restants à 0.

8. Appareil pour le traitement de signal de ligne d'abonné numérique, comprenant :
un module porteur (61), configuré de façon à utiliser des symboles dans une trame à envoyer pour porter des données à envoyer ; dans lequel les données à envoyer sont portées complètement sur une partie des symboles dans la trame, tandis que des symboles restants dans la trame portent des informations inactives ;
**caractérisé en ce que** l'appareil comprend en outre :
un module l'acquisition de symboles restants (62) configuré de façon à acquérir le nombre des symboles restants qui ne portent pas les données à envoyer ; et
un module d'addition et d'envoi (63), configuré de façon à ajouter à la trame des informations du nombre des symboles restants, et à envoyer la trame qui porte les données à envoyer et les informations du nombre des symboles restants.

9. Appareil selon la revendication 8, comprenant en outre :
un premier module de réglage de puissance, configuré de façon à régler, lorsque le module d'addition et d'envoi (63) envoie les symboles restants, la puissance d'envoi de signal des symboles restants à 0 pour les symboles restants.

10. Appareil selon la revendication 9, comprenant en outre :
un module de génération de signal de synchronisation, configuré de façon à générer un signal de synchronisation de créneau temporel de trajet descendant, dans lequel :
le module d'addition et d'envoi (63) est configuré de façon à envoyer, déclenché par le signal de synchronisation de créneau temporel de trajet descendant, une trame envoyée qui porte les données à envoyer et les informations du nombre des symboles restants.

11. Appareil selon la revendication 9, dans lequel le premier module de réglage de puissance est configuré en outre de façon à régler, lorsque le module d'addition et d'envoi (63) envoie la trame, la puissance d'envoi de signal de tous les symboles dans un ensemble de symboles pré-attribués dans la trame à une valeur non 0, et la trame est une trame qui porte les données à envoyer et les informations du nombre des symboles restants.

12. Appareil selon la revendication 8, comprenant en outre :
un module de remplacement de symboles, configuré de façon à remplacer les symboles restants par des symboles inactifs connus par un côté de réception.

13. Appareil selon la revendication 12, dans lequel les symboles inactifs sont les mêmes que le dernier symbole qui porte les données, ou qu'un symbole spécifique dont le mode de modulation et le contenu porteur de bits sont organisés au préalable par les côtés d'envoi et de réception.

14. Appareil selon la revendication 8, dans lequel le module de remplacement de symboles est configuré spécifiquement de façon à remplacer une partie des symboles restants par des symboles inactifs connus par un côté de réception ;
l'appareil comprenant en outre :
un deuxième module de réglage de puissance, configuré de façon à régler la puissance d'envoi de signal de l'autre partie des symboles restants à 0.

15. Système pour le traitement de signal de ligne d'abonné numérique, comprenant un émetteur-récepteur xDSL (750) dans un central téléphonique et un émetteur-récepteur xDSL (720) dans des locaux d'abonné, dans lequel l'émetteur-récepteur xDSL (750) dans le central téléphonique est connecté à l'émetteur-récepteur xDSL (720) dans les locaux d'abonné par l'intermédiaire d'une paire torsadée, et l'émetteur-récepteur xDSL dans le central téléphonique et/ou l'émetteur-récepteur xDSL dans les locaux d'abonné comprennent l'appareil de traitement de signal d'une ligne d'abonné numérique selon l'une quelconque des revendications 8 à 14.
